# EUROPÄISCHE PATENTSCHRIFT

(11) **EP 3 609 960 B1**
(45) Veröffentlichungstag und Bekanntmachung des Hinweises auf die Patenterteilung: **27.09.2023**
(21) Anmeldenummer: 18716281.3
(22) Anmeldetag: 10.04.2018
(51) Int. Cl.: C09D 5/28, C09D 7/45, C09D 7/42, C09D 7/40, C09D 133/10

(54) **STRUKTURIERTE OBERFLÄCHEN ERZEUGENDE BESCHICHTUNGSMITTEL**
COATING AGENT WHICH CREATES STRUCTURED SURFACES
AGENT DE REVÊTEMENT PRODUISANT DES SURFACES STRUCTURÉES

(30) Priorität: 11.04.2017 EP 17165903
(43) Veröffentlichungstag der Anmeldung: 19.02.2020
(73) Patentinhaber: BASF Coatings GmbH, 48165 Münster (DE)
(72) Erfinder: WEGENER, Elke, 48163 Münster (DE); JANSSEN, Andreas, 48565 Steinfurt (DE); MAGARINOS, Maria Del Rosario, 19139 Ciudad Valdeluz (ES)
(74) Vertreter: BASF IP Association
(86) Internationale Anmeldenummer: PCT/EP2018/059141
(87) Internationale Veröffentlichungsnummer: WO 2018/189166

(56) Entgegenhaltungen:
- EP-A1- 2 072 585
- EP-A2- 0 281 124
- WO-A1-87/05924
- WO-A1-2016/156953
- WO-A2-2008/031589
- WO-A2-2010/147690
- DE-A1- 19 917 228

## Beschreibung

Die vorliegende Erfindung betrifft Beschichtungsmittel zur Erzeugung strukturierter Oberflächen, insbesondere zur Erzeugung strukturierter Klarlackierungen sowie ein Verfahren zur Herstellung der Beschichtungsmittel. Desweiteren betrifft die Erfindung Mehrschichtlackierungen umfassend eine Lackschicht, die aus dem erfindungsgemäßen Beschichtungsmittel erhalten wird. Weiterer Gegenstand der Erfindung ist die Verwendung einer Kombination zweier verschiedener Amide als Additive für Beschichtungsmittelzusammensetzungen.

Es besteht seit langem ein Bedarf an Beschichtungsmitteln zur Erzeugung von strukturierten Oberflächen, die auch ohne den Zusatz üblicher mattierender Zusätze wie beispielsweise Kieselsäuren, stabile Beschichtungsmittelzusammensetzungen bilden und aus welchen insbesondere raue und vorzugsweise trotzdem auch glänzende Klarlackierungen erhalten werden können.

Aus der EP-A-1 088 037 sind Beschichtungsmittelzusammensetzungen, insbesondere Automobillacke bekannt, die unter Verwendung pastenförmiger, Mattierungs- und/oder Strukturierungsmittelzubereitungen erhalten werden. Die Pasten sollen hierbei selbst bei längerer Lagerung kein Absetzen zeigen. Die Mattierungspasten enthalten ein Mattierungsmittel auf der Basis von pyrogener Kieselsäure während die Strukturierungspasten sowohl pyrogene Kieselsäure als Mattierungsmittel, als auch ein Strukturierungsmittel auf der Basis von Polyamidgranulat enthalten. Die Strukturpaste dient der Herstellung eines 2-Komponentenlacks aus einem Stammlack und einem Polyisocyanat mit freien Isocyanatgruppen als Härter, für die Lackierung von Kunststoffsubstraten.

Ähnliche Strukturierungspasten auf Basis von pyrogener Kieselsäure und einem Polyamidpulver in Kombination mit Celluloseacetobuyrat zur Herstellung von Beschichtungsmitteln wurden auch bereits in der DE 198 10 900 C2 beschrieben.

Die vorstehend beschriebenen Beschichtungsmittelzusammensetzungen erfordern jedoch zwingend den Einsatz sogenannter Strukturierungspasten und Mattierungspasten. Im Übrigen stand bei diesen die Mattierungswirkung im Vordergrund. Gegen ein Absetzen stabilisierte Beschichtungsmittelzusammensetzungen ohne Mattierungsmittelanteil wurden nicht beschrieben.

Aufgabe der vorliegenden Erfindung war es ein Beschichtungsmittel zur Verfügung zu stellen, welches stabil gegen Absetzen ist und strukturierte Lackschichten bildet, insbesondere Klarlackschichten, die ohne nennenswerten Anteil an pyrogener Kieselsäure oder den Einsatz von Strukturierungspasten auskommen. Die aus den erfindungsgemäßen Beschichtungsmittelzusammensetzungen erhaltenden Lackierungen sollten alle Anforderungen an qualitativ hochwertige Lackierungen erfüllen, insbesondere die Anforderungen an Automobilserienlackierungen oder Automobilreparaturlackierungen. Sie sollten insbesondere eine hohe Ringleitungsstabilität aufweisen und Lackierungen mit besonders regelmäßiger Oberflächenstruktur, hoher Kratzfestigkeit und Chemikalienbeständigkeit liefern. Auch soll ein Weißanlaufen nach einem Schwitzwasser-Konstantklima-Test (SKK-Test) minimiert werden.

Überraschenderweise wurde gefunden, dass die vorstehenden Aufgaben durch Beschichtungsmittelzusammensetzungen gelöst werden, umfassend
(i) mindestens eine Polyolkomponente (A),
(ii) mindestens eine Vernetzungsmittelkomponente (B) mit gegenüber Hydroxylgruppen der Komponente (A) reaktiven Gruppen,
(iii) mindestens eine Polyamid-Komponente (P1), die aus einer Monoaminomonocarbonsäure oder deren Lactam durch Polykondensation bzw. Ringöffnungspolymerisation erhältlich ist und bei welcher die Säureamidgruppen durch einen gesättigten, aliphatischen Kohlenwasserstoffrest mit 6 bis 13 Kohlenstoffatomen verbunden sind und die in partikulärer Form eingesetzt wird, wobei deren Partikelgrößenverteilung der Primärpartikel, mit Laserbeugung bestimmt, einen Median der Teilchengröße (D₅₀) von 20 bis 100 µm besitzt, und (iv) mindestens eine Polycarbonsäureamid-Komponente (P2), wobei die Polycarbonsäureamid-Komponente (P2) folgende Strukturformel 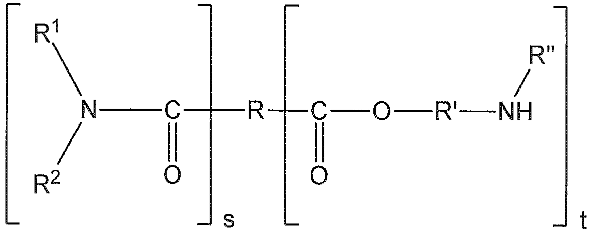
   besitzt, worin
   s = 1, 2 oder 3 ist,
   t = 0 oder 1 ist, und
   s + t = 2 oder 3 ist,
   R für einen (s+t)-bindigen organischen Rest steht, gewählt aus der Gruppe bestehend aus
      (a) aliphatischen Kohlenwasserstoffgruppen mit 2 bis 60 Kohlenstoffatomen,
      (b) aliphatischen oder aliphatisch-aromatischen Resten, die 2 bis 8 Carbonsäureamidgruppen enthalten und zusätzlich 6 bis 150 Kohlenstoffatome in Form von Kohlenwasserstoffresten, und
      (c) aliphatischen Resten, die 2 bis 75 Ethergruppen (-O-) enthalten und zusätzlich 4 bis 150 Kohlenstoffatome in Form von Kohlenwasserstoffresten,
      (d) aromatischen Kohlenwasserstoffgruppen mit 6 bis 20 Kohlenstoffatomen,
   R¹ für Wasserstoff oder CₙH₂ₙR³ steht, worin n = 2 bis 6 ist und R³ für Wasserstoff oder einen Rest der Struktur (X)ₚ-R⁴ steht, worin p = 0 oder 1 ist und für
   p = 0 der Rest R⁴ für OH steht, und für
   p = 1 der Rest X für ein Sauerstoffatom oder eine Carbonsäureester-Gruppe steht und R⁴
      i. für einen 1 bis 3 Hydroxylgruppen enthaltenden aliphatischen Kohlenwasserstoffrest mit 2 bis 80 Kohlenstoffatomen steht, oder
      ii. für einen 1 bis 3 Hydroxylgruppen enthaltenden aliphatischen Rest steht, der 0 bis 39 Gruppen gewählt aus der Gruppe der Ethergruppen (-O-) und Carbonsäureestergruppen enthält und zusätzlich 2 bis 80 Kohlenstoffatome in Form von Kohlenwasserstoffresten enthält,
   und R² ein Rest CₙH₂ₙ-(X)ₚ-R⁴ ist; und
   -R'-NH-R" für
      einen Rest -CₙH₂ₙ-NH-CₙH₂ₙ-(X)ₚ-R⁴,
      einen Rest -R⁴'-X-CₙH₂ₙ-NH-R¹oder
      einen Rest -R⁴'-X-CₙH₂ₙ-NH-CₙH₂ₙ-(X)ₚ-R⁴ steht,
         worin
         R^{4,} für einen 0 bis 2 Hydroxylgruppen enthaltenden aliphatischen Kohlenwasserstoffrest mit 2 bis 80 Kohlenstoffatomen steht, oder
         R⁴' für einen 0 bis 2 Hydroxylgruppen enthaltenden aliphatischen Rest steht, der 0 bis 39 Gruppen gewählt aus der Gruppe der Ethergruppen und Carbonsäureestergruppen enthält und zusätzlich 2 bis 80 Kohlenstoffatome in Form von Kohlenwasserstoffresten enthält.

### Polyol-Komponente (A)

Als Polyol-Komponente (A) werden vorzugsweise oligomere und/oder polymere Polyole eingesetzt. In untergeordneten Anteilen können den Oligo- und/oder Polymeren der Polyol-Komponente (A) niedermolekulare Polyole beigemischt werden.

Als niedermolekulare Polyole werden beispielsweise niedermolekulare Diole, wie bevorzugt Ethylenglykol, Neopentylglykol, 1,2-Propandiol, 2,2,-Dimethyl-1,3-Propandiol, 1,4-Butandiol, 1, 3-Butandiol, 1 5-Pentandiol, 2,2,4-Trimethyl-1,3-pentandiol, 1,6-Hexandiol, 1,4-Cyclohexandimethanol und 1,2-Cyclohexandimethanol, sowie niedermolekulate Polyole, wie bevorzugt Trimethylolethan, Trimethylolpropan, Trimethylolhexan, 1,2,4-Butantriol, Pentaerytritol sowie Dipentaerytritol, eingesetzt.

Die bevorzugten oligo- und/oder polymeren Polyole der Polyol-Komponente (A) weisen vorzugsweise gewichtsmittlere Molekulargewichte M_{w} > 500 g/mol, gemessen mittels GPC (Gelpermeationschromatographie, 25 °C) bevorzugt von 800 bis 100000 g/mol, insbesondere von 1000 bis 50000 g/mol auf.

Besonders bevorzugt sind Polyesterpolyole, Polyurethanpolyole, Polysiloxanpolyole und insbesondere Poly(meth)acrylatpolyole. Der Begriff "(Meth)acryl" steht hierin sowohl für "Acryl" als auch für "Methacryl". Poly(meth)acrylate können demnach sowohl Polyacrylate, Polymethacrylate als auch Mischpolymerisate aus Acrylaten und Methacrylaten sein. Zudem können Poly(meth)acrylate neben den Acrylaten und Methacrylaten, die entsprechenden freien Säuren (Acrylsäure und/oder Methacrylsäure) wie weitere ethylenisch ungesättigte Monomere einpolymerisiert enthalten.

Die Polyol-Komponente (A) weist bevorzugt eine Hydroxylzahl von 80 bis 250 mg KOH/g, insbesondere von 100 bis 220 KOH/g und besonders bevorzugt von 150 bis 200 mg KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2:2007-11).

Die Glasübergangstemperaturen der Polyole in der Polyol-Komponente (A), gemessen per DSC (Differential-Scanning-Kalorimetrie) nach DIN EN ISO 11357-2:2014-07 bei einer Aufheizrate von 10 °C/min, liegen bevorzugt zwischen -150 und 100 °C, besonders bevorzugt zwischen -120°C und 80°C und ganz besonders bevorzugt zwischen -50°C und 40 °C oder zwischen -40°C und 35°C.

Typische hierin geeignete Polyesterpolyole sind beispielsweise in EP-A-0 994117 und EP-A-1273640 beschrieben.

Typische geeignete Polyurethanpolyole werden vorzugsweise durch Umsetzung von Polyesterpolyol-Präpolymeren mit geeigneten Di- oder Polyisocyanaten hergestellt und sind beispielsweise in EP-A-1273640 beschrieben.

Typische geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Poly(meth)acrylatpolyole sind in der Regel Copolymerisate und weisen vorzugsweise gewichtsmittlere Molekulargewichte M_{w} von 1000 bis 20000 g/mol, insbesondere von 1500 bis 10000 g/mol und besonders bevorzugt 3000 bis 7000 g/mol auf, jeweils gemessen mittels der oben angegebenen GPC-Methode.

Die Glasübergangstemperatur Tg der bevorzugten Poly(meth)acrylatpolyole der Polyol-Komponente (A) beträgt vorzugsweise von -100 bis 100 °C C und besonders bevorzugt zwischen -50°C und 50 °C. Die Glasübergangstemperatur wird mit Hilfe der oben angegebenen DSC-Methode bestimmt.

Die Poly(meth)acrylatpolyole weisen bevorzugt eine Hydroxylzahl von 80 bis 250 mg KOH/g, insbesondere von 100 bis 220 KOH/g und besonders bevorzugt von 150 bis 200 mg KOH/g, auf.

Die Poly(meth)acrylatpolyol-Komponente (A) weist bevorzugt eine Säurezahl von 0 bis 30 mg KOH/g, besonders bevorzugt 3 bis 10 mg KOH/g auf. Die Säurezahl gibt hierbei die Anzahl der mg Kaliumhydroxid an, die zur Neutralisation von 1 g der Poly(meth)acrylatpolyol-Komponente (A) verbraucht werden (DIN EN ISO 2114:2002-06).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Vernetzungsmittel-Komponente (B)

Als Komponente (B) enthalten die erfindungsgemäßen Beschichtungsmittel mindestens eine Verbindung mit gegenüber Hydroxylgruppen reaktiven Gruppen. Als Vernetzungsmittel können dabei alle üblicherweise eingesetzten Vernetzungsmittel, die gegenüber Hydroxylgruppen reaktive Gruppen aufweisen, eingesetzt werden. Beispiele für geeignete Vernetzungsmittel sind anhydridfunktionelle Verbindungen, Aminoplastharze, Tris(alkoxycarbonylamino)triazine und deren Derivate, Verbindungen mit freien, d .h. unblockierten, und/oder blockierten Isocyanatgruppen und/oder epoxyfunktionelle Verbindungen. Dabei können auch Mischungen verschiedener Vernetzungsmittel eingesetzt werden.

Beispielsweise sind als Komponente (B) Aminoplastharze und/oder Epoxyharze, verwendbar. Bevorzugt sind dabei aliphatische Epoxyharze, welche eine hohe Witterungsstabilität aufweisen. Solche Epoxyharze sind beispielsweise in der Monographie von B. Ellis "Chemistry and Technology of Epoxy Resins" (Blackie Academic & Professional, 1993, Seiten 1 bis 35) beschrieben. Als Komponente (B) kommen auch anstelle der Epoxyharze oder zusammen mit den Epoxyharzen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften U S-A-4710542 und EP-B-0 245 700 sowie in dem Artikel von B.

Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Als Komponente (B) können auch Tris(alkoxycarbonylamino)triazine und deren Derivate eingesetzt werden. Geeignete Tris(alkoxycarbonylamino)triazine sind beispielsweise in der US-A-4,939,213, Spalte 2, Zeile 33, bis Spalte 7, Zeile 63, der US-A-5,084,541, Spalte 2, Zeile 51, bis Spalte 7, Zeile 63, und der EP-A-0624577, Spalte 3, Zeile 33, bis Spalte 16, Zeile 5, beschrieben. Geeignete Tris(alkoxycarbonylamino)triazine sind auch im Handel unter der Bezeichnung Larotact^{®} LR 9018 der Firma BASF SE erhältlich.

Bevorzugt enthalten die erfindungsgemäßen Beschichtungsmittel in der Vernetzungsmittel-Komponente (B) eine oder mehrere Vernetzungsmittel mit freien, d .h. unblockierten, und/oder blockierten Isocyanatgruppen und/oder Aminoplastharze und/oder Tris(alkoxycarbonylamino)triazine.

Bevorzugt enthalten die erfindungsgemäßen Beschichtungsmittel in der Komponente (B) Vernetzungsmittel mit freien und/oder blockierten Isocyanatgruppen, ggf. zusammen mit weiteren Vernetzungsmitteln, insbesondere mit Aminoplastharzen und/oder Tris(alkoxycarbonylamino)triazinen. Vernetzungsmittel mit blockierten Isocyanatgruppen werden bevorzugt dann in Komponente (B) eingesetzt, wenn die erfindungsgemäßen Beschichtungsmittel als sogenannte einkomponentige (1K)-Systeme eingesetzt werden. Besonders bevorzugt ist jedoch der Einsatz von Vernetzungsmitteln, die freie Isocyanatgruppen enthalten.

Beispiele für bevorzugte Isocyanatgruppen enthaltende Verbindungen der Komponente (B) sind an sich bekannte substituierte oder unsubstituierte aromatische, aliphatische, cycloaliphatische und/oder heterocyclische Polyisocyanate, wobei bevorzugt aliphatische und/oder cycloaliphatische Polyisocyanate eingesetzt werden. Beispiele für bevorzugte aliphatische und/oder cycloaliphatische Polyisocyanate sind: Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanat, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4' -diisocyanat, 4,4'-Methylendicyclohexyldiisocyanat (z.B. Desmodur^{®} W der Fa. Bayer AG), Tetramethylxylyldiisocyanate (z.B. TMXDI^{®} der Fa. American Cyanamid) und Mischungen der vorgenannten Polyisocyanate.

Weiterhin bevorzugte Vernetzungsmittel der Komponente (B) sind die Dimeren und Trimeren, insbesondere die Uretdion-Dimere, Biuret-Dimere und die Isocyanurat-Trimere der vorgenannten Diisocyanate.

Besonders bevorzugte Vernetzungsmittel der Komponente (B) sind Hexamethylen-1,6-diisocyanat (HDI), Isophorondiisocyanat (IPDI) und 4,4' - Methylendicyclohexyldiisocyanat, deren Uretdion-Dimere, Biuret-Dimere und/oder Isocyanurat-Trimere. Ganz besonders bevorzugt sind die Isocyanurat-Trimere des Hexamethylen-1,6-diisocyanats.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

### Das Verhältnis der Komponenten (A) und (B)

Der Gewichtsanteil der einzusetzenden hydroxylgruppenhaltigen Verbindungen (A), bezogen auf den Gewichtsanteil der isocyanatgruppenhaltigen Verbindungen (B), hängt vom Hydroxyäquivalentgewicht des Polyols und vom Äquivalentgewicht der Verbindung (B), also im Falle der bevorzugt als Komponente (B) eingesetzten Polyisocyanate vom Äquivalentgewicht der freien Isocyanatgruppen des Polyisocyanates (B), ab.

Die erfindungsgemäßen Beschichtungsmittel enthalten bevorzugt zwischen 30 bis 70 Gew.-%, bevorzugt 40 bis 60 Gew.-% und besonders bevorzugt 45 bis 55 Gew.-%, jeweils bezogen auf die nicht flüchtigen Bestandteile des Beschichtungsmittels, mindestens einer hydroxylgruppenhaltigen Verbindung (A) und/oder bevorzugt zwischen 20 bis 50 Gew.-%, bevorzugt 25 bis 45 Gew.-% und besonders bevorzugt 30 bis 40 Gew.-%, jeweils bezogen auf die nicht flüchtigen Bestandteile des Beschichtungsmittels, mindestens eines Vernetzungsmittels (B). Der nicht flüchtige Anteil des Beschichtungsmittels wird durch Trocknen einer Beschichtungsmittelprobe (1 g) bei 125 °C für 60 min bestimmt.

Die Gewichtsanteile des Polyols (A) und des Vernetzungsmittels (B), bevorzugt des Polyisocyanates (B), werden vorzugsweise solchermaßen gewählt, dass das molare Äquivalentverhältnis der reaktiven Gruppen der Komponente (B) (also im Falle der Polyisocyanate der Isocyanatgruppen der Verbindungen (B)) zu den Hydroxylgruppen der hydroxylgruppenhaltigen Verbindungen (A) zwischen 0,7:1 und 1:1,3, bevorzugt zwischen 0,8:1 und 1,2:1, besonders bevorzugt zwischen 0,9:1 und 1,1:1, liegt.

Handelt es sich um sogenannte einkomponentige Beschichtungsmittel, so werden isocyanatgruppenhaltigen Verbindungen (B) gewählt, deren freie Isocyanat-Gruppen mit den üblichen Blockierungsmitteln blockiert sind. Beispielsweise können die freien Isocyanatgruppen mit substituierten Pyrazolen, insbesondere mit alkylsubstituierten Pyrazolen, wie 3-Methylpyrazol, 3,5-Dimethylpyrazol, 4-Nitro-3,5-dimethypyrazol, 4-Bromo-3 ,5-dimethylpyrazol und ähnlichen blockiert werden.

Ganz besonders bevorzugt werden die Isocyanatgruppen der Komponente (B) mit 3,5-Dimethylpyrazol, blockiert.

### Polyamidkomponente (P1) und Polycarbonsäureamidkomponente (P2)

Die erfindungsgemäße Beschichtungsmittelzusammensetzung enthält zwei voneinander verschiedene Amidkomponenten, eine Polyamidkomponente (P1), die aus einer Monoaminomonocarbonsäure oder deren Lactam durch Polykondensation bzw. Ringöffnungspolymerisation erhältlich ist und eine Polycarbonsäureamid-komponente (P2), die aus Di- und/oder Tricarbonsäuren, deren Estern oder Anydriden und hydroxyfunktionellen Aminen erhältlich ist.

### Polyamid-Komponente (P1)

Die Polyamid-Komponente (P1) lässt sich beispielsweise durch Ringöffnungspolymerisation von Lactamen der folgenden Formel (I) herstellen: 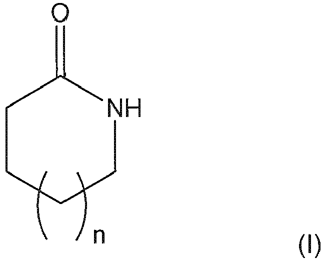 worin n = 6 bis 10, vorzugsweise 7 bis 9 und besonders bevorzugt 8 ist. Die Ringöffnungspolymerisation kann durch Zugabe von Wasser bei erhöhtem Druck und erhöhter Temperatur eingeleitet werden. Ein entsprechendes Verfahren für n = 8 (Laurinlactam) ist beispielsweise in der US-A-5,362,448 offenbart.

Die Ringöffnung kann prinzipiell auch unter Verwendung von Monoalkoholen oder Monoaminen als Starterverbindungen erfolgen.

Auch ist die Herstellung der Polyamid-Komponente (P1) durch Polykondensation aus alpha, omega-Aminocarbonsäuren der Formel (I'):

HOOC-R'-NH₂ (I')

mit R' = C₉-₁₃-Alkylen möglich.

Die Polyamid-Komponente (P1) wird in Form von Partikeln, insbesondere als Pulver eingesetzt. Die Partikelgrößenverteilung der Primärpartikel des Pulvers wird mittels Laserbeugung (ISO 13320-1:1999) bestimmt. Hierfür besonders geeignet ist beispielsweise der Mastersizer 2000 der Firma Malvern. Der Median der Teilchengröße (D₅₀) beträgt 20 bis 100 µm, vorzugsweise 30 bis 90 µm, besonders bevorzugt 40 bis 70 µm, und ganz besonders bevorzugt 50 bis 60 µm.

Liegt der Median der Teilchengröße (D₅₀) unterhalb von 20 µm, so werden im Übrigen gleiche, insbesondere chemisch gleiche Partikel hierin zu den Mattierungsmitteln (M) gezählt.

Der Schmelzpunkt der Partikel der Polyamid-Komponente (P1) liegt nach DIN EN ISO 3146:2002-06 vorzugsweise bei über 160 °C, besonders bevorzugt bei über 170 °C bis 350 °C.

Derartige Polyamide sind beispielsweise von der Firma Evonik Industries AG, Essen, Deutschland unter der Marke Vestosint^{®} käuflich erhältlich.

Vorzugsweise beträgt der Anteil der Polyamid-Komponente (P1) am Gesamtgewicht der Beschichtungsmittelzusammensetzung 1 bis 20 Gew.-%, besonders bevorzugt 5 bis 15 Gew.-% und ganz besonders bevorzugt 8 bis 12 Gew.-%.

Generell gilt, dass sich die Rauigkeit der resultierenden Oberflächen der aus den erfindungsgemäßen Beschichtungsmitteln erhaltenen Lackschichten über die im Beschichtungsmittel eingesetzte Menge der Polyamid-Komponente (P1) steuern lässt. Je höher der Anteil der Polyamid-Komponente (P1) am Gesamtgewicht des Beschichtungsmittels ist, desto rauer ist die Oberfläche der aus dem Beschichtungsmittel erhaltenen gehärteten Lackschicht.

### Polycarbonsäureamid-Komponente (P2)

Ein Polycarbonsäureamid ist eine amidierte Polycarbonsäure. Die Polycarbonsäureamid-Komponente (P2) der vorliegenden Erfindung lässt sich durch die Strukturformel (II) wiedergeben: 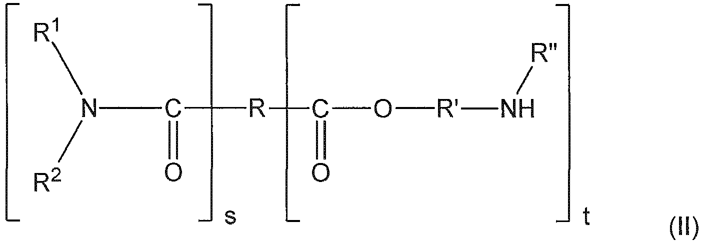 wobei
s = 1, 2 oder 3 ist,
t = 0 oder 1 ist, und
s + t = 2 oder 3 ist,
R für einen (s+t)-bindigen organischen Rest steht, gewählt aus der Gruppe bestehend aus
   (a) aliphatischen Kohlenwasserstoffgruppen mit 2 bis 60 Kohlenstoffatomen,
   (b) aliphatischen oder aliphatisch-aromatischen Resten, die 2 bis 8 Carbonsäureamidgruppen enthalten und zusätzlich 6 bis 150 Kohlenstoffatome in Form von Kohlenwasserstoffresten, und
   (c) aliphatischen Resten, die 2 bis 75 Ethergruppen (-O-) enthalten und zusätzlich 4 bis 150 Kohlenstoffatome in Form von Kohlenwasserstoffresten,
   (d) aromatischen Kohlenwasserstoffgruppen mit 6 bis 20 Kohlenstoffatomen,
R¹ für Wasserstoff oder CₙH₂ₙR³ steht, worin n = 2 bis 6 ist und R³ für Wasserstoff oder einen Rest der Struktur (X)ₚ-R⁴ steht, worin p = 0 oder 1 ist und für
p = 0 der Rest R⁴ für OH steht, und für
p = 1 der Rest X für ein Sauerstoffatom oder eine Carbonsäureester-Gruppe steht und R⁴
   i. für einen 1 bis 3 Hydroxylgruppen enthaltenden aliphatischen Kohlenwasserstoffrest mit 2 bis 80 Kohlenstoffatomen steht, oder
   ii. für einen 1 bis 3 Hydroxylgruppen enthaltenden aliphatischen Rest steht, der 0 bis 39 Gruppen gewählt aus der Gruppe der Ethergruppen (-O-) und Carbonsäureestergruppen enthält und zusätzlich 2 bis 80 Kohlenstoffatome in Form von Kohlenwasserstoffresten enthält,
und R² ein Rest CₙH₂ₙ-(X)ₚ-R⁴ ist; und
-R'-NH-R" für
   einen Rest -CₙH₂ₙ-NH-CₙH₂ₙ-(X)ₚ-R⁴,
   einen Rest -R⁴'-X-CₙH₂ₙ-NH-R¹oder
   einen Rest -R⁴'-X-CₙH₂ₙ-NH-CₙH₂ₙ-(X)ₚ-R⁴ steht,
      worin
      R⁴' für einen 0 bis 2 Hydroxylgruppen enthaltenden aliphatischen Kohlenwasserstoffrest mit 2 bis 80 Kohlenstoffatomen steht, oder
      R⁴' für einen 0 bis 2 Hydroxylgruppen enthaltenden aliphatischen Rest steht, der 0 bis 39 Gruppen gewählt aus der Gruppe der Ethergruppen und Carbonsäureestergruppen enthält und zusätzlich 2 bis 80 Kohlenstoffatome in Form von Kohlenwasserstoffresten enthält.

Es handelt sich bei der Polycarbonsäureamid-Komponente (P2) somit um eine Polyhydroxypolycarbonsäureamid-Komponente (P2).

Der Begriff der "Bindigkeit" in Bezug auf R bezieht sich auf die Anzahl der Bindungen des Restes R an die s [R¹R²N-CO] und die t [CO-O-R`-NHR"] Reste.

Vorzugsweise steht R für einen (s+t)-bindigen organischen Rest, gewählt aus der Gruppe bestehend aus
(a) aliphatischen Kohlenwasserstoffgruppen mit 6 bis 44, besonders bevorzugt 34 bis 42 Kohlenstoffatomen,
(b) aliphatischen Resten, die 2 Carbonsäureamidgruppen enthalten und zusätzlich 70 bis 90 Kohlenstoffatome in Form von Kohlenwasserstoffresten, und
(c) aliphatischen Resten, die 3 bis 13 Ethergruppen (-O-) enthalten und zusätzlich 6 bis 26 Kohlenstoffatome in Form von Kohlenwasserstoffresten.

Vorzugsweise besitzen beide Reste R¹ und R² unabhängig voneinander die Struktur CₙH₂ₙ-(X)ₚ-R⁴.

Die Polycarbonsäureamid-Komponente (P2) kann beispielsweise durch Reaktion von (A) einer Polycarbonsäure (III) oder eines Polycarbonsäureesters (III) 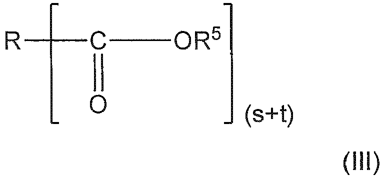 worin
R, s und t wie oben definiert sind, und
R⁵ für Wasserstoff oder einen Alkylrest mit 1 bis 6 Kohlenstoffatomen steht; oder eines entsprechenden Anhydrids der Formel (III`) 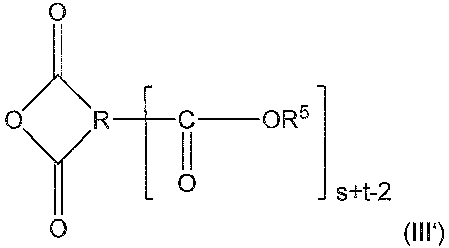 und
(B) einem primären oder sekundären Amin der Formel HNR¹R², worin R¹ und R² wie oben definiert sind, erhalten werden.

Da das Amin der Formel NHR¹R² neben der NH-Gruppe zusätzlich im Rest R¹ und/oder Rest R² mindestens eine Hydroxylgruppe enthält, kann das Amin nicht nur über seine Aminogruppe mit der Komponente der Formel (III) oder (III`) reagieren, sondern auch über eine Hydroxylgruppe. Dies ist in der allgemeinen Formel (II) durch die Indizes s und t dargestellt. Die s Amideinheiten werden durch die Reaktion der Komponente (III) oder (III`) mit der NH-Gruppe des Amins NHR¹R² gebildet, während die t Estereinheiten durch Reaktion der Komponente (III) oder (III`) mit einer Hydroxylgruppe in einem der Reste R¹ oder R² des Amins NHR¹R² gebildet werden.

Typische Polycarbonsäuren der Formel (III) sind beispielsweise solche mit aliphatischen Kohlenwasserstoffresten R mit 2 bis 60 Kohlenstoffatomen. Der kurzkettigste Vertreter ist die Bernsteinsäure. Diese kann auch als Anhydrid entsprechend der Formel (III') eingesetzt werden. Es können jedoch auch sogenannte Dimerfettsäuren oder Trimerfettsäuren eingesetzt werden, welche Vertreter der besonders langkettigen aliphatischen Kohlenwasserstoff-Reste R darstellen.

Säureamidgruppen enthaltende Reste R können beispielsweise erhalten werden indem zwei Dicarbonsäuremoleküle mit einem Diaminmolekül verknüpft werden, so dass wiederum eine Dicarbonsäure entsteht, welche im Rest R zwei Carbonsäureamidgruppen enthält. Wählt man beispielsweise anstelle des Diamins zur Verknüpfung ein Polyetherdiol, so können auf diese Weise Ethergruppen in den Rest R eingeführt werden.

Typische Vertreter von Carbonsäuren mit einem aromatischen Rest R sind beispielsweise Phthalsäure und deren Anhydrid, Terephthalsäure und deren Anhydrid oder deren Methylester.

Besonders bevorzugte Amine NHR¹R² sind beispielsweise Dialkanolamine. Bevorzugte Dialkanolamine enthalten als Alkanol-Reste solche mit 2 bis 6 Kohlenstoffatomen, vorzugsweise 2 bis 4 und besonders bevorzugt 2 bis 3 Kohlenstoffatomen. Ganz besonders bevorzugte Amine NHR¹R² sind Diethanolamin und Diisopropanolamin.

Die Dialkanolamine können auch durch Umsetzung mit Lactonen zu Carbonsäureestergruppen enthaltenden Resten umgesetzt werden. Bevorzugte Lactone sind beispielsweise ε-Caprolacton und δ-Valerolacton.

Die Dialkanolamine können auch durch Umsetzung mit Oxirangruppen enthaltenden Verbindungen (Oxiranen) wie beispielsweise Glycidol umgesetzt werden. Bei der Umsetzung mit Glycidol kommt es beispielsweise zur Formierung eines Rests mit zwei Hydroxylgruppen.

Wie durch die Definition der Indizes s und t ersichtlich ist, werden im Mittel mindestens 50 % der Gruppen COOR⁵ unter Amidbildung umgesetzt.

Dier Herstellung derartiger Polycarbonsäureamide (P2) erfolgt beispielsweise entsprechend der DE 37 06 860 A1.

Vorzugsweise beträgt der Anteil der Polycarbonsäureamid-Komponente (P2) am Gesamtgewicht der Beschichtungsmittelzusammensetzung 0,01 bis 1,0 Gew.-%, besonders bevorzugt 0,02 bis 0,50 Gew.-% und ganz besonders bevorzugt 0,05 bis 0,20 Gew.-%.

Vorzugsweise beträgt der Anteil an Polycarbonsäureamid-Komponente (P2) bezogen auf den Anteil der Polyamid-Komponente (P1) im Beschichtungsmittel 0,2 bis 5,0 Gew.-%, besonders bevorzugt 0,3 bis 2,5 Gew.-% und ganz besonders bevorzugt 0,5 bis 1,0 Gew.-%.

### Weitere Komponenten des Beschichtungsmittels

Die erfindungsgemäßen Beschichtungsmittel können weitere Komponenten enthalten. Hierbei handelt es sich insbesondere um organische Lösemittel oder Additive wie beispielsweise UV-Absorber, Lichtstabilisatoren, Verlaufmittel, Katalysatoren zur Katalyse der Vernetzungreaktionen, Entschäumer, Radikalfänger, Haftvermittler, Rheologiehilfsmittel, filmbildende Hilfsmittel, Slipadditive, Flammschutzmittel oder Farbstoffe.

Die erfindungsgemäßen Beschichtungsmittelzusammensetzungen sind üblicherweise im Wesentlichen wasserfrei, dies bedeutet, dass deren Wassergehalt vorzugsweise kleiner 1,0 Gew.-%, besonders bevorzugt kleiner 0,5 Gew.-% und ganz besonders bevorzugt kleiner 0,2 Gew.-%, bezogen auf das Gesamtgewicht der Beschichtungsmittelzusammensetzung ist.

Als Lösemittel für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aprotische Lösemittel, wie beispielsweise aliphatische und/oder aromatische Kohlenwasserstoffe wie Toluol, Xylol, Solventnaphtha^{®}, Solvesso 100 oder Hydrosol ^{®} (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Protische Lösemittel wie beispielsweise n-Butanol sollten, sofern sie überhaupt eingesetzt werden, in untergeordneten Mengen, vorzugsweise in Mengen von 0 bis 0,5 Gew.-%, besonders bevorzugt 0 bis 0,2 Gew.-% bezogen auf die Beschichtungsmittelzusammensetzung eingesetzt werden.

Wenngleich die Beschichtungsmittelzusammensetzungen der vorliegenden Erfindung keine zusätzlichen Mattierungsmittel (M) enthalten müssen, können solche dennoch im Rahmen der Erfindung eingesetzt werden, wenn neben der Strukturierung durch Komponente (P1) auch eine gewisse Mattierung gewünscht ist. Werden Mattierungsmittel (M) eingesetzt, so geschieht dies üblicherweise in einer Menge, die unterhalb der Mattierungsmittelmengen der aus dem Stand der Technik bekannten Beschichtungsmittelzusammensetzungen liegt. Als Mattierungsmittel (M) lassen sich beispielsweise Kieselsäuren einsetzen, vorzugsweise pyrogene Kieselsäuren wie beispielsweise Acematt^{®} 3300. Die Partikelgrößenverteilung der Primärpartikel der Mattierungsmittel (M) wird wie die der Polyamid-Komponente (P1) bestimmt.

Als Mattierungsmittel lassen sich aber auch Polyamide mit einem Median der Korngröße (D₅₀) von weniger als 20 µm, vorzugsweise 3 bis 19 µm, besonders bevorzugt 5 bis 15 µm einsetzen.

Der Median der Teilchengröße (D₅₀) der Mattierungsmittelteilchen liegt unterhalb des Medians der Teilchen der im Beschichtungsmittel verwendeten Polyamid-Komponente (P1). Er wird üblicherweise mit dem gleichen Verfahren bestimmt. Der Median der Teilchengröße (D₅₀) der Mattierungsmittelteilchen beträgt vorzugsweise 3 bis 19 µm, besonders bevorzugt 5 bis 15 µm.

Werden Mattierungsmittel (M) eingesetzt, so liegt deren Median der Teilchengröße (D₅₀) vorzugsweise um mindestens 10 µm, besonders bevorzugt um mindestens 25 µm und ganz besonders bevorzugt um mindestens 30 µm oder gar 40 µm niedriger als der der Polyamid-Komponente (P1).

Werden Mattierungsmittel (M) eingesetzt, so werden diese vorzugsweise in einer Menge von 0,5 bis 4,0 Gew.-%, besonders bevorzugt 1,0 bis 2,0 Gew.-% und ganz besonders bevorzugt 1,5 bis 2,5 Gew.-% bezogen auf das Gesamtgewicht der Beschichtungsmittelzusammensetzung eingesetzt.

Das Gewichtsverhältnis der Mattierungsmittel-Komponente (M) in Bezug auf die Polyamid-Komponente (P1) beträgt vorzugsweise von 1:10 bis 8:10 und besonders bevorzugt 1:10 bis 6:10 und ganz besonders bevorzugt 1:10 bis 3:10. Bei zunehmendem Verhältnis von Mattierungsmittel (M) zur Polyamid-Komponente (P1) nehmen üblicherweise der Strukturierungseffekt ab und die Mattierung zu.

In einer besonders bevorzugten Ausführungsform enthält die Beschichtungsmittelzusammensetzung keine Mattierungsmittel (M), insbesondere keine Kieselsäuren.

### Verfahren zur Herstellung der erfindungsgemäßen Beschichtungmittelzusammensetzungen

Zur Herstellung der erfindungsgemäßen Beschichtungsmittelzusammensetzungen bedarf es keiner besonderen Vorbereitung der Polyamid-Komponente (P1) oder der gegebenenfalls eingesetzten Mattierungsmittel (M) in Form von Pasten.

Es können vielmehr die bei Raumtemperatur (25 °C) flüssigen Komponenten ganz oder teilweise vorgelegt werden und die bei Raumtemperatur festen Komponenten nachträglich unter Rühren mit handelsüblichen Lackmischvorrichtungen eingerührt werden.

### Herstellung von Mehrschichtlackierungen

Die erfindungsgemäßen Beschichtungsmittelzusammensetzungen werden üblicherweise als letzte, das heißt äußerste und somit vom Substrat am weitesten entfernte Lackschicht eingesetzt.

Üblicherweise und besonders bevorzugt handelt es sich bei dieser Lackschicht um eine Klarlackschicht, das heißt eine unpigmentierte, gegebenenfalls mit löslichen Farbstoffen gefärbte Lackschicht.

Die Lackierung kann beispielsweise Naß-in-naß mit darunterliegenden Lackschichten erfolgen, mit denen die oberste Lackschicht gemeinsam gehärtet wird.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder Klarlackierungen hervorragend haften, eignen sie sich neben dem Einsatz in der Automobilserienlackierung (OEM-Lackierung), gegebenenfalls nach Zusatz entsprechender Katalysatoren, ausgezeichnet für die Autoreparaturlackierung oder die Kunststofflackierung.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Trockenschichtdicke der mit der erfindungsgemäßen Beschichtungsmittelzusammensetzung hergestellten Schicht, vorzugsweise der Klarlackschicht, sollte vorzugsweise mindestens 15 µm, besser mindestens 20 µm betragen, um den Aufbau eines gleichmäßigen Films zu gewährleisten. Die Trockenschichtdicke sollte vorzugsweise im Bereich von 15 µm bis 80 µm, besonders bevorzugt im Bereich von 20 µm bis 70 µm, ganz besonders bevorzugt im Bereich von 25 µm bis 60 µm oder 30 µm bis 50 µm liegen. Die Trockenschichtdicken wurden mikroskopisch bestimmt. Die Details der Bestimmung sind dem experimentellen Teil der vorliegenden Erfindung entnehmbar. Im Übrigen orientiert sich die gewählte Trockenschichtdicke vorzugsweise an die Partikelgröße der Polyamid-Komponente (P1). So ist es im Hinblick auf die Güte des Strukturierungseffekts, insbesondere die Regelmäßigkeit der Strukturierung vorteilhaft, wenn die Trockenschichtdicke kleiner ist als der Median der Teilchengröße (D₅₀) der Primärpartikel der Polyamid-Komponente (P1). Ist die Trockenschichtdicke deutlich höher als der vorgenannte D₅₀-Wert, so geht der Strukturierungseffekt zunehmend verloren oder wird zu unregelmäßig.

Die Aushärtung der applizierten erfindungsgemäßen Beschichtungsmittel kann nach einer gewissen Ruhezeit erfolgen. Die Ruhezeit dient beispielsweise dem Verlauf und zur Entgasung der Lackschichten oder zum Verdunsten von flüchtigen Bestandteilen wie Lösemitteln. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen.

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung und den für die Lackierung von Anbauteilen angewandten Temperaturen, die bevorzugt zwischen 30 und 90°C liegen, auch längere Härtzeiten zur Anwendung kommen können.

Die Beschichtungsmittel führen, in der Regel nach Zusatz eines geeigneten Katalysators, auch bei Härtung bei niedrigen Temperaturen von maximal 90°C, wie sie im Bereich der Beschichtung von Kunststoffteilen, beispielsweise für Automobil-Anbauteile, oder im Bereich der Autoreparaturlackierung üblich sind, zu Beschichtungen mit einer sehr guten optischen Qualität. Gleichzeitig zeigen die erfindungsgemäßen Beschichtungsmittel eine gute Ringleitungsstabilität.

Außerdem weisen die Beschichtungsmittel eine gute Sedimentationsstabilität auf, das heißt, dass auch nach längerer Lagerung von beispielsweise mehreren Monaten, die Beschichtungsmittel bei Umgebungstemperatur keine Bildung eines Bodensatzes zeigen, der sich nicht innerhalb von maximal 1 h mit einem üblichen Labormischer (insbesondere Vollrath 370W, Typ, EWTHV 0,5" der Firma Paul Vollrath GmbH & CO. KG, Hürth, Drehzahl 800 Umdrehungen pro Minute, Lenartscheibe d = 90 mm) mit einer Drehzahl von 800 Umdrehungen pro Minute nur noch schwer oder gar nicht mehr aufrühren ließe.

Die erfindungsgemäßen Beschichtungsmittel liefern außerdem neue gehärtete Beschichtungen, insbesondere Lackierungen, speziell Klarlackierungen, Formteile, speziell optische Formteile, und freitragende Folien mit einer rauen Oberfläche.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere von Kraftfahrzeugen, wie Motorrädern, Bussen, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung und für die Lackierung von Anbauteilen angewandten Temperaturen, die bevorzugt zwischen 30 und 90°C liegen, auch längere Härtzeiten zur Anwendung kommen können.

Weiterer Gegenstand der vorliegenden Erfindung ist die Verwendung einer Formulierung umfassend mindestens eine Polyamid-Komponente (P1) und mindestens eine Polycarbonsäureamid-Komponente (P2) als Additiv in Beschichtungsmittelzusammensetzungen zur Herstellung strukturierter, vorzugsweise glänzender Lackierungen, vorzugsweise Klarlackierungen.

Vorzugsweise entspricht das Verhältnis der beiden Komponenten (P1) und (P2) in der Formulierung bereits dem Verhältnis der beiden Komponenten im fertigen Beschichtungsmittelsystem.

Vorzugsweise erfolgt die erfindungsgemäße Verwendung in Beschichtungsmittelzusammensetzungen enthaltend die oben beschriebenen Komponenten (A) und (B).

Im Folgenden wird die Erfindung anhand von Beispielen näher erläutert.

### BEISPIELE

Sofern nicht anders angemerkt sind alle Angaben in Gewichtsteilen.

Es werden erfindungsgemäße Klarlacke **B1** und **B2** hergestellt. Der erfindungsgemäße Klarlack B1 wird aus 100 Gewichtsteilen des Stammlacks **S1** (siehe Tabelle 1) und 33 Gewichtsteilen des Härters H (siehe Tabelle 2) erhalten. Der erfindungsgemäße Klarlack B2 wird aus 106,7 Gewichtsteilen des Stammlacks **S2** (siehe Tabelle 1) und 33 Gewichtsteilen des Härters H (siehe Tabelle 2) erhalten. So ist bei beiden erfindungsgemäßen Klarlacken das Verhältnis der Polyol-Komponente (A) zur Isocyanat-Komponente des Härters identisch.

**Tabelle 1**

| **Stammlack** | **S1** | **S2** |
|---|---|---|
| Polyolkomponente **(A)¹** | 67 | 67 |
| Butyldiglykolacetat | 6 | 6 |
| Butylglykolacetat | 3,6 | 3,6 |
| Butylacetat | 5,4 | 5,4 |
| Solventnaphta 160/180 | 2,7 | 2,7 |
| Ethoxypropylacetat | 4,4 | 4,4 |
| Butanol | 0,15 | 0,15 |
| UV-absorber | 1,0 | 1,0 |
| HALS | 0,9 | 0,9 |
| polyethermodifiziertes Polydimethylsiloxan (Verlaufmittel) | 0,35 | 0,35 |
| Polycarbonsäureamidkomponente **(P2)**² | 0,2 | 0,2 |
| Polyamidkomponente **(P1)³** | 5,5 | 15 |
| Mattierungsmittel (M)⁴ | 2,8 | 0 |

| | | |
|---|---|---|
| ¹ Poly(meth)acrylatpolyol-Komponente auf Basis von 2-Hydroxypropylmethacrylat, Cyclohexylmethacrylat, 2-Ethylhexylmethacrylat, 2-Ethylhexylacrylat, und Acrylsäure (65 %ig; Trocknen: 1 h, 150 °C); OH-Zahl: 180 mg KOH/g, M_{w}: ca. 4650 g/mol, Säurezahl: ca. 7 mg KOH/g; ² Polyhydroxycarbonsäureamid ³ Polyamid-12, D₅₀: 57 µm ⁴ pyrogene Kieselsäure; D₅₀:10 µm | | |

Die flüssigen Stammlack-Komponenten werden vorgemischt. Die Feststoffe werden nachträglich unter Rühren mit einer Lenartscheibe zugegeben. Die Mischung wird ca. 20 Minuten gerührt. Das Mischen erfolgt mit einem Labormischer (Vollrath 370W, Typ "EWTHV 0,5" der Firma Paul Vollrath GmbH & CO. KG, Drehzahl 1200 U/min Zahnscheibe d= 90mm) bei ca. 800-1000 U/min.

**Tabelle 2**

| **Härter** | **H** |
|---|---|
| aliphatisches Polyisocyanat basierend auf HDI-Trimeren (Isocyanuraten) | 80,6 |
| Solvent Naphtha 160/180 | 9,7 |
| Butylacetat | 9,7 |

### Vergleich verschiedener Strukturmittel

Als erfindungsgemäßes Beispiel wurde der Klarlack gemäß Beispiel **B1** verwendet (Polyamidkomponente **(P1);** Polyamid-12, D₅₀ = 57 µm). Zur Herstellung der nicht erfindungsgemäßen Klarlacke wurde die Komponente **P1** im Stammlack **S1** durch die in Tabelle 3 angegebenen **Strukturmittel 1 bis** 3 in gleicher Menge ersetzt. So werden die Vergleichsklarlacke **VB1** (Strukturmittel 1), **VB2** (Strukturmittel 2) und **VB3** (Strukturmittel 3) erhalten.

**Tabelle 3**

| Name | Chemische Beschreibung | Median der Korngröße (D₅₀ in µm) |
|---|---|---|
| Polyamidkomponente **(P1)** | Polyamid-12 | 57 |
| Strukturmittel 1 (Vergleich) | Methylpolyharnstoff | 31 |
| Strukturmittel 2 (Vergleich) | Polypropylen | 40 |
| Strukturmittel 3 (Vergleich) | Copolyester | 39 |

Der erfindungsgemäße Klarlack nach Beispiel **B1** sowie die nicht erfindungsgemäßen Klarlacke **VB1, VB2** und **VB3** wurden mittels pneumatischer Applikation auf ein mit ein metallisches Substrat aufgebracht (Trockenschichtdicke: 40 µm; Ablüftzeit: 7 min bei 23 °C; Trocknung: 20 min bei 140 °C), welches mit einem kathodischen Elektrotauchlack (Cathoguard 500), einem wässrigen Füller (FU48-9000; 25 - 30 µm Trockenschichtdicke; Ablüftzeit: 10 min bei 23 °C; Trocknung 8 min 70 °C; Einbrennen: 17 min bei 155 °C) der BASF Coatings GmbH und einem schwarzen wässrigen Basislack (WB040; Trockenschichtdicke 10-15 µm; Ablüftzeit: 5 min bei 23°C) der BASF Coatings GmbH beschichtet war.

Die Trockenschichtdicke der Klarlackschichten aus den Lacken der Beispiele **B1, VB1, VB2** und **VB3** betrug 40 µm.

### Bestimmung der Trockenschichtdicken

Die Trockenschichtdicken wurden mikroskopisch bei 500-facher Vergrößerung im Querschliff-Verfahren bestimmt. Hierzu wurde ein etwa 2 cm x 2 cm großes Stück des beschichteten Substrats ausgeschnitten. Die Probe wurde senkrecht in einer Halterung befestigt und diese wurde in eine Einbettform (Durchmesser ca. 40 mm) gestellt. Aus 21 Gewichtsteilen Epofix-Harz und 2,7 Gewichtsteilen Epofix-Härter (beide von der Firma Struers GmbH, Willich, Germany) wurde ein härtbares 2-Komponenten-Epoxid-Einbettmittel gemischt, welches in die Einbettform gegossen wurde. Das Einbettmittel wurde in der Einbettform für 18 Stunden gehärtet. Das gehärtete Einbettmittel mit der darin eingeschlossenen Probe wurde anschließend entnommen, quergeschliffen und poliert. Die Schichtdickenmessung erfolgte mittels eines Mikroskops (Olympus BX51; Auflicht Dunkelfeld und Durchlicht). Die Trockenschichtdicke des strukturierten Klarlacks wurde an den Stellen gemessen, an welchen keine Strukturmittelteilchen erkennbar waren.

### Schwitzwasser-Konstantklimatest

Zur Überprüfung der Haftfestigkeit wurden die Proben für 240h einem Schwitzwasser-Konstantklimatest nach DIN EN ISO 6270-1:2002-02 ausgesetzt und anschließend nach 1 Stunde Rekonditionierung auf ein Weißanlaufen untersucht. Die Ergebnisse sind in Tabelle 4 dargestellt.

### Oberflächencharakterisierung (Regelmäßigkeit der Struktur)

Die Oberflächencharakterisierung erfolgte sowohl über die Haptik der Oberfläche als auch unter Verwendung der Weißlichtinterferometrie (Gerät: "µsurf mobile" der Firma NanoFocus AG, Oberhausen, Deutschland) mit welchem sich die Struktur der Oberfläche ermitteln lässt. Der Begriff "Regelmäßigkeit" bedeutet eine gleichmäßige Verteilung der Partikel an der Klarlackoberfläche, die prinzipiell auch visuell bewertbar ist. Mittels des µsurf-mobile-Geräts lässt sich jedoch zusätzlich die Höhe der aus dem Klarlack ragenden Partikelteile bestimmen, die im Sinne einer Regelmäßigkeit möglichst weniger variieren sollte. Die Ergebnisse sind in Tabelle 4 dargestellt.

### Gradientenofentest nach Daimler

Im Gradientenofen-Test nach Daimler (Daimlerprüfmethode PBODC 371) wurde insbesondere die Beständigkeit gegenüber vollentsalztem Wasser und Pankreatin untersucht. Nur bei der Polyamidkomponente (P1) konnte gegenüber beiden Substanzen eine Beständigkeit selbst bei Temperaturen oberhalb 81 °C gefunden werden. Die Ergebnisse sind in Tabelle 4 dargestellt.

### Kratzfestigkeit (AMTEC)

Die Kratzfestigkeit wurde gemäß dem AMTEC-Laboratory Autowaschtest nach DIN EN ISO 20566 (2007-01) bestimmt. Die Ergebnisse sind in Tabelle 4 dargestellt.

**Tabelle 4**

| **Test** | **B1** | **VB1** | **VB2** | **VB3** |
|---|---|---|---|---|
| **Schwitzwasser-Konstantklimatest** | Minimales Weißanlaufen | Sehr starkes Weißanlaufen | Starkes Weißanlaufen | Leichtes Weißanlaufen |
| **Regelmäßigkeit der Struktur** | +++ | + | ++ | + |
| **Gradientenofen-Test (Daimler)** | +++ | + | +++ | ++ |
| **Kratzfestigkeit (AMTEC)** | +++ | ++ | ++ | + |

| | | | | |
|---|---|---|---|---|
| +++: sehr gut ++: gut +: noch gut | | | | |

### Absetzverhalten

100 g des Stammlacks wurden in eine 200 ml Weithalsglasflasche gefüllt und bei Raumtemperatur 7 Tage gelagert.

**Tabelle 5**

| **Stammlack** | **VS1** (Vergleich) | **S3** |
|---|---|---|
| Polyolkomponente **(A)¹** | 73 | 73 |
| Butyldiglykolacetat | 6,5 | 6,5 |
| Butylglykolacetat | 4 | 4 |
| Butylacetat | 6,13 | 6,13 |
| Solventnaphta 160/180 | 3 | 3 |
| Ethoxypropylacetat | 4,77 | 4,77 |
| Butanol | 0,15 | 0,15 |
| UV-absorber | 1,1 | 1,1 |
| HALS | 1 | 1 |
| polyethermodifiziertes Polydimethylsiloxan (Verlaufmittel) | 0,35 | 0,35 |
| Polycarbonsäureamidkomponente **(P2)**² | 0 | 0,2 |
| Polyamidkomponente **(P1)^{d}** | 6 | 6 |
| Mattierungsmittel (M)⁴ | 3 | 3 |
| | Bodensatz | kein Bodensatz |

| | | |
|---|---|---|
| ¹ Poly(meth)acrylatpolyol-Komponente auf Basis von 2-Hydroxypropylmethacrylat, Cyclohexylmethacrylat, 2-Ethylhexylmethacrylat, 2-Ethylhexylacrylat, und Acrylsäure (65 %ig; Trocknen: 1 h, 150 °C); OH-Zahl: 180 mg KOH/g, M_{w}: ca. 4650 g/mol, Säurezahl: ca. 7 mg KOH/g; ² Polyhydroxycarbonsäureamid ³ Polyamid-12, D₅₀: 57 µm ⁴ pyrogene Kieselsäure; D₅₀: 10 µm | | |

Bei Abwesenheit der erfindungsgemäßen Komponente **P2** im Stammlack (Vergleichsstammlack **VS1)** bildet sich ein unerwünschter Bodensatz. Beim erfindungsgemäßen Stammlack bildet sich kein Bodensatz.

### Bestimmung der Phasentrennung

Die Phasentrennung wurde mittels Lineal ausgemessen. Die Messergebnisse sind für die Stammlacke **S4** bis **S7** und **S8** bis **S11** für unterschiedliche Konzentrationen an Komponente **P2** in Tabelle 6 angegeben.

**Tabelle 6**

| | **S4** | **S5** | **S6** | **S7** | **S8** | **S9** | **S10** | **S11** |
|---|---|---|---|---|---|---|---|---|
| Polyolkomponente **(A)1** | 67 | 67 | 67 | 67 | 67 | 67 | 67 | 67 |
| Butyldiglykolacetat | 6 | 6 | 6 | 6 | 6 | 6 | 6 | 6 |
| Butylglykolacetat | 3,6 | 3,6 | 3,6 | 3,6 | 3,6 | 3,6 | 3,6 | 3,6 |
| Butylacetat | 5,4 | 5,4 | 5,4 | 5,4 | 5,4 | 5,4 | 5,4 | 5,4 |
| Solventnaphta 160/180 | 2,7 | 2,7 | 2,7 | 2,7 | 2,7 | 2,7 | 2,7 | 2,7 |
| Ethoxypropylacetat | 4,4 | 4,4 | 4,4 | 4,4 | 4,4 | 4,4 | 4,4 | 4,4 |
| Butanol | 0,15 | 0,15 | 0,15 | 0,15 | 0,15 | 0,15 | 0,15 | 0,15 |
| UV-absorber | 1 | 1 | 1 | 1 | 1 | 1 | 1 | 1 |
| HALS | 0,9 | 0,9 | 0,9 | 0,9 | 0,9 | 0,9 | 0,9 | 0,9 |
| polyethermodifiziertes Polydimethylsiloxan (Verlaufmittel) | 0,35 | 0,35 | 0,35 | 0,35 | 0,35 | 0,35 | 0,35 | 0,35 |
| Polycarbonsäureamid-Komponente **(P2)**² | 0,2 | 0,5 | 0,7 | 1,0 | 0,2 | 0,5 | 0,7 | 1,0 |
| Polyamid-Komponente **(P1)³** | 9 | 9 | 9 | 9 | 14 | 14 | 14 | 14 |
| Mattierungsmittel 4⁴ | 8 | 8 | 8 | 8 | | | | |
| Mattierungsmittel 5⁵ | | | | | 6 | 6 | 6 | 6 |
| Phasentrennung in mm | 12 | 11 | 11 | 10 | 27 | 26 | 25 | 22 |
| Bodensatz | nein | nein | nein | nein | nein | nein | nein | nein |

| | | | | | | | | |
|---|---|---|---|---|---|---|---|---|
| ¹ Poly(meth)acrylatpolyol-Komponente auf Basis von 2-Hydroxypropylmethacrylat, Cyclohexylmethacrylat, 2-Ethylhexylmethacrylat, 2-Ethylhexylacrylat, und Acrylsäure (65 %ig; Trocknen: 1 h, 150 °C); OH-Zahl: 180 mg KOH/g, M_{w}: ca. 4650 g/mol, Säurezahl: ca. 7 mg KOH/g; ² Polyhydroxycarbonsäureamid ³ Polyamid-12, D₅₀: 57 µm ⁴ Polyamid-12, D₅₀: 11 µm ⁵ Polyamid-12, D₅₀: 6 µm | | | | | | | | |

### Ringleitungsstabilität

Die Prüfung der Ringleitungsstabilität erfolgte dadurch, dass die Stammlacke **S1** und **S2** (siehe Tabelle 1) in einer Ringleitung umgepumpt und dabei einer Scherbelastung ausgesetzt werden, wobei folgende Bedingungen gegeben sind:
Druck am Rücklaufkontrollventil: 10 bar
Doppelhübe pro Minute: 18
Volumen (Doppelhub): 0,6 I

Vor der Scherbelastung in der Ringleitung (Turn Over = TO = 0) und nach jeweils 100, 500, 720, 1500 und 2000 Durchläufen in der Ringleitung wird der Glanzgrad bei 60° der Beschichtungen gemessen. Eine ausreichende Ringleitungsstabilität der Beschichtungsmittel ist dann gegeben, wenn der Glanzgrad in einem Winkel von 60° um maximal 10 Glanzeinheiten nach Scherung durch Umpumpen in einer Ringleitung erhöht wird. Die Messung des Glanzes erfolgte jeweils bei 60° mit einem handelsüblichen Glanzgerät Byk Gardner, micro-TRI-gloss, Kat. Nr. 4520 der Firma Byk Gardner. Die Ergebnisse sind in Tabelle 7 dargestellt.

**Tabelle 7**

| Anzahl der Durchläufe (=TO) in der Ringleitung | **S1** | | **S2** | |
|---|---|---|---|---|
| | Glanz 60° | Differenz zu TO = 0 | Glanz 60° | Differenz zu TO = 0 |
| 0 | 14 | 0 | 7 | 0 |
| 100 | 15 | 1 | 6 | -1 |
| 500 | 19 | 4 | 5 | -2 |
| 720 | 19 | 4 | 5 | -2 |
| 1500 | 21 | 7 | 5 | -2 |
| 2000 | 19 | 4 | 4 | -3 |

## Patentansprüche

1. Beschichtungsmittelzusammensetzung, umfassend
(i) mindestens eine Polyolkomponente (A),
(ii) mindestens eine Vernetzungsmittelkomponente (B) mit gegenüber Hydroxylgruppen der Komponente (A) reaktiven Gruppen,
(iii) mindestens eine Polyamid-Komponente (P1), die aus einer Monoaminomonocarbonsäure oder deren Lactam durch Polykondensation bzw. Ringöffnungspolymerisation erhältlich ist und bei welcher die Säureamidgruppen durch einen gesättigten, aliphatischen Kohlenwasserstoffrest mit 6 bis 13 Kohlenstoffatomen verbunden sind und die in partikulärer Form eingesetzt wird, wobei deren Partikelgrößenverteilung der Primärpartikel, mit Laserbeugung bestimmt, einen Median der Teilchengröße (D₅₀) von 20 bis 100 µm besitzt, und
(iv) mindestens eine Polycarbonsäureamid-Komponente (P2), **dadurch gekennzeichnet, dass**
die Polycarbonsäureamid-Komponente (P2) folgende Strukturformel 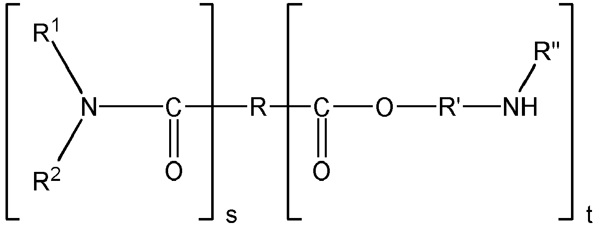
besitzt, worin
s = 1, 2 oder 3 ist,
t = 0 oder 1 ist, und
s + t = 2 oder 3 ist,
R für einen (s+t)-bindigen organischen Rest steht, gewählt aus der Gruppe bestehend aus
(a) aliphatischen Kohlenwasserstoffgruppen mit 2 bis 60 Kohlenstoffatomen,
(b) aliphatischen oder aliphatisch-aromatischen Resten, die 2 bis 8 Carbonsäureamidgruppen enthalten und zusätzlich 6 bis 150 Kohlenstoffatome in Form von Kohlenwasserstoffresten, und
(c) aliphatischen Resten, die 2 bis 75 Ethergruppen enthalten und zusätzlich 4 bis 150 Kohlenstoffatome in Form von Kohlenwasserstoffresten,
(d) aromatischen Kohlenwasserstoffgruppen mit 6 bis 20 Kohlenstoffatomen,
R¹ für Wasserstoff oder CₙH₂ₙR³ steht, worin n = 2 bis 6 ist und R³ für Wasserstoff oder einen Rest der Struktur (X)ₚ-R⁴ steht, worin p = 0 oder 1 ist und für p = 0 der Rest R⁴ für OH steht, und für
p = 1 der Rest X für ein Sauerstoffatom oder eine Carbonsäureester-Gruppe steht und R⁴
i. für einen 1 bis 3 Hydroxylgruppen enthaltenden aliphatischen Kohlenwasserstoffrest mit 2 bis 80 Kohlenstoffatomen steht, oder
ii. für einen 1 bis 3 Hydroxylgruppen enthaltenden aliphatischen Rest steht, der 0 bis 39 Gruppen gewählt aus der Gruppe der Ethergruppen und Carbonsäureestergruppen enthält und zusätzlich 2 bis 80 Kohlenstoffatome in Form von Kohlenwasserstoffresten enthält,
und R² ein Rest CₙH₂ₙ-(X)ₚ-R⁴ ist; und
-R'-NH-R" für
einen Rest -CₙH₂ₙ-NH-CₙH₂ₙ-(X)ₚ-R⁴,
einen Rest -R⁴'-X-CₙH₂ₙ-NH-R¹oder
einen Rest -R⁴'-X-CₙH₂ₙ-NH-CₙH₂ₙ-(X)ₚ-R⁴ steht,
worin
R⁴' für einen 0 bis 2 Hydroxylgruppen enthaltenden aliphatischen Kohlenwasserstoffrest mit 2 bis 80 Kohlenstoffatomen steht, oder
R⁴' für einen 0 bis 2 Hydroxylgruppen enthaltenden aliphatischen Rest steht, der 0 bis 39 Gruppen gewählt aus der Gruppe der Ethergruppen und Carbonsäureestergruppen enthält und zusätzlich 2 bis 80 Kohlenstoffatome in Form von Kohlenwasserstoffresten enthält.

2. Beschichtungsmittelzusammensetzung gemäß Anspruch 1, **dadurch gekennzeichnet, dass** die Polyamid-Komponente (P1) durch Ringöffnungspolymerisation von Lactamen der folgenden Formel (I): 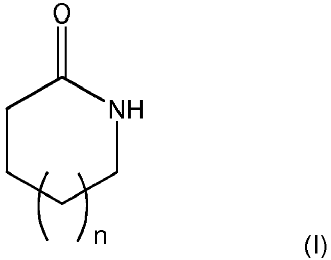
worin n = 6 bis 10; oder
durch Polykondensation aus alpha, omega-Aminocarbonsäuren der Formel (I'):
HOOC-R'-NH₂ (I')
mit R' = C₉-₁₃-Alkylen,
herstellbar ist.

3. Beschichtungsmittelzusammensetzung gemäß Anspruch 1 oder 2, **dadurch gekennzeichnet, dass**
R für einen (s+t)-bindigen organischen Rest, gewählt aus der Gruppe bestehend aus
(a) aliphatischen Kohlenwasserstoffgruppen mit 6 bis 44, besonders bevorzugt 34 bis 42 Kohlenstoffatomen,
(b) aliphatischen Resten, die 2 Carbonsäureamidgruppen enthalten und zusätzlich 70 bis 90 Kohlenstoffatome in Form von Kohlenwasserstoffresten, und
(c) aliphatischen Resten, die 3 bis 13 Ethergruppen (-O-) enthalten und zusätzlich 6 bis 26 Kohlenstoffatome in Form von Kohlenwasserstoffresten,
steht.

4. Beschichtungsmittelzusammensetzung gemäß einem der Ansprüche 1 bis 3, **dadurch gekennzeichnet, dass** beide Reste R¹ und R² unabhängig voneinander für die Struktur CₙH₂ₙ-(X)ₚ-R⁴ stehen.

5. Beschichtungsmittelzusammensetzung gemäß einem der Ansprüche 1 bis 4, **dadurch gekennzeichnet, dass** Polycarbonsäureamid-Komponente (P2) durch Reaktion von
(A) einer Polycarbonsäure (III) oder einem Polycarbonsäureester (III) 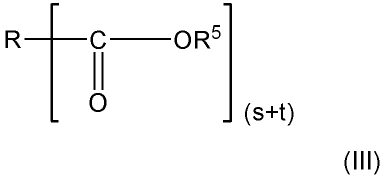 worin
R, s und t wie in den Ansprüchen 1 bis 4 definiert sind, und
R⁵ für Wasserstoff oder einen Alkylrest mit 1 bis 6 Kohlenstoffatomen steht; oder einem Anhydrid der Formel (III') 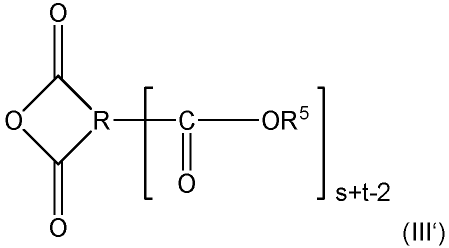 worin
R, R⁵, s und t wie vorstehend definiert sind
und
(B) einem primären oder sekundären Amin der Formel HNR¹R², worin R¹ und R² wie in den Ansprüchen 1 bis 4 definiert sind,
erhältlich ist.

6. Beschichtungsmittelzusammensetzung gemäß Anspruch 5 **dadurch gekennzeichnet, dass** das Amin NHR¹R² ein Dialkanolamin ist oder das Umsetzungsprodukt eines Dialkanolamins mit Lactonen oder Oxiranen.

7. Beschichtungsmittelzusammensetzung gemäß einem der Ansprüche 1 bis 6, **dadurch gekennzeichnet, dass** der Schmelzpunkt der Polyamid-Komponente (P1) nach DIN EN ISO 3146:2002-06 im Bereich von 160 °C bis 350 °C liegt.

8. Beschichtungsmittelzusammensetzung gemäß einem der Ansprüche 1 bis 7, **dadurch gekennzeichnet, dass** die Polyolkomponente (A) eine Hydroxylzahl von 80 bis 250 mg KOH/g aufweist und gewählt ist aus der Gruppe der Polyesterpolyole, Polyurethanpolyole, Polysiloxanpolyole und Poly(meth)acrylatpolyole.

9. Beschichtungsmittelzusammensetzung gemäß Anspruch 8, **dadurch gekennzeichnet, dass**, die Polyolkomponente (A) ein Poly(meth)acrylatpolyol ist.

10. Beschichtungsmittelzusammensetzung gemäß einem der Ansprüche 1 bis 9, **dadurch gekennzeichnet, dass** die Vernetzungsmittelkomponente (B) ein oder mehrere Vernetzungsmittel enthält gewählt aus der Gruppe der Vernetzungsmittel mit freien Isocyanatgruppen, der Vernetzungsmittel mit blockierten Isocyanatgruppen, der Aminoplaste und der Tris(alkoxycarbonylamino)triazine.

11. Beschichtungsmittelzusammensetzung gemäß Anspruch 10, **dadurch gekennzeichnet, dass** die Vernetzungsmittelkomponente (B) ein oder mehrere Vernetzungsmittel enthält oder aus diesen besteht, die gewählt sind aus der Gruppe der Vernetzungsmittel mit freien Isocyanatgruppen.

12. Beschichtungsmittelzusammensetzung gemäß Anspruch 11, **dadurch gekennzeichnet, dass** das Vernetzungsmittel gewählt ist aus der Gruppe bestehend aus Hexamethylen-1,6-diisocyanat, Isophorondiisocyanat und 4,4' - Methylendicyclohexyldiisocyanat, deren Uretdion-Dimeren, Biuret-Dimeren und/oder Isocyanurat-Trimeren.

13. Beschichtungsmittelzusammensetzung gemäß einem der Ansprüche 1 bis 12, **dadurch gekennzeichnet, dass** diese frei von Kieselsäuren ist.

14. Beschichtungsmittelzusammensetzung gemäß einem der Ansprüche 1 bis 12, **dadurch gekennzeichnet**, diese als Mattierungsmittel (M) eine Kieselsäure enthält die eine Partikelgrößenverteilung der Primärpartikel besitzt deren Median der Teilchengröße (D₅₀) unterhalb des Medians der Teilchen der im Beschichtungsmittel verwendeten Polyamid-Komponente (P1) liegt.

15. Verfahren zu Herstellung einer Beschichtungsmittelzusammensetzung wie sie in Ansprüche 1 bis 14 definiert ist, **dadurch gekennzeichnet, dass** die bei 25 °C flüssigen Komponenten ganz oder teilweise vorgelegt werden und die bei 25 °C festen Komponenten nachträglich, mit dem gegebenenfalls noch vorhandenen restlichen bei 25 °C flüssigen Komponenten eingerührt werden.

16. Mehrschichtlackierung, **dadurch gekennzeichnet, dass** diese als äußerste Klarlackschicht eine Schicht umfasst, die aus einer Beschichtungsmittelzusammensetzung gemäß einem der Ansprüche 1 bis 14 erhalten wurde.

17. Mehrschichtlackierung gemäß Anspruch 16, wobei die Klacklackschicht eine Trockenschichtdicke im Bereich von 20 bis 60 µm besitzt.

18. Verwendung einer Formulierung umfassend mindestens eine Polyamid-Komponente (P1) wie sie in einem der Ansprüche 1, 2 oder 7 definiert ist und mindestens eine Polycarbonsäureamid-Komponente (P2) wie sie in einem der Ansprüche 1 oder 3 bis 6 definiert ist, als Additiv in Beschichtungsmittelzusammensetzungen zur Herstellung strukturierter Lackierungen.

## Claims

1. Coating material composition comprising
(i) at least one polyol component (A),
(ii) at least one crosslinking agent component (B) having groups reactive toward hydroxyl groups of component (A),
(iii) at least one polyamide component (P1) which is obtainable from a monoaminomonocarboxylic acid or lactam thereof by polycondensation or ring-opening polymerization, respectively, and wherein the acid amide groups are connected by a saturated, aliphatic hydrocarbon radical having 6 to 13 carbon atoms, said component being used in a particulate form wherein the size distribution of the primary particles, determined by laser diffraction, possesses a particle size median (D₅₀) of 20 to 100 µm, and
(iv) at least one polycarboxamide component (P2), **characterized in that**
the polycarboxamide component (P2) possesses the following structural formula 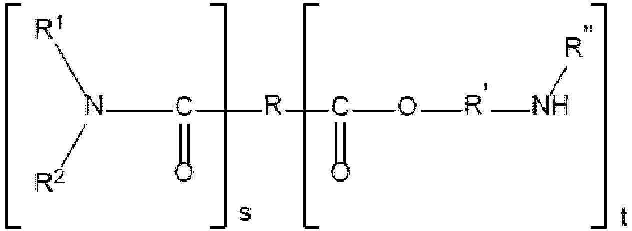
in which
s is 1, 2 or 3,
t is 0 or 1, and
s + t is 2 or 3,
R is an (s + t)-valent organic radical selected from the group consisting of
(a) aliphatic hydrocarbon groups having 2 to 60 carbon atoms,
(b) aliphatic or aliphatic-aromatic radicals containing 2 to 8 carboxamide groups and additionally 6 to 150 carbon atoms in the form of hydrocarbon radicals, and
(c) aliphatic radicals containing 2 to 75 ether groups and additionally 4 to 150 carbon atoms in the form of hydrocarbon radicals,
(d) aromatic hydrocarbon groups having 6 to 20 carbon atoms,
R¹ is hydrogen or CₙH₂ₙR³, in which n is 2 to 6 and R³ is hydrogen or a radical of the structure (X)ₚ-R⁴, in which p is 0 or 1 and, if p is 0, the radical R⁴ is OH, and, if p is 1, the radical X is an oxygen atom or a carboxylic ester group,
and R⁴
i. is an aliphatic hydrocarbon radical containing 1 to 3 hydroxyl groups and having 2 to 80 carbon atoms, or
ii. is an aliphatic radical containing 1 to 3 hydroxyl groups, containing 0 to 39 groups selected from the group of ether groups and carboxylic ester groups, and additionally containing 2 to 80 carbon atoms in the form of hydrocarbon radicals,
and R² is a radical CₙH₂ₙ-(X)ₚ-R⁴; and
-R'-NH-R" is
a radical -CₙH₂ₙ-NH-CₙH₂ₙ-(X)ₚ-R⁴,
a radical -R⁴'-X-CₙH₂ₙ-NH-R¹ or
a radical -R⁴'-X-CₙH₂ₙ-NH-CₙH₂ₙ-(X)ₚ-R⁴,
in which
R⁴' is an aliphatic hydrocarbon radical containing 0 to 2 hydroxyl groups and having 2 to 80 carbon atoms, or
R⁴' is an aliphatic radical containing 0 to 2 hydroxyl groups, containing 0 to 39 groups selected from the group of ether groups and carboxylic ester groups, and additionally containing 2 to 80 carbon atoms in the form of hydrocarbon radicals.

2. Coating material composition according to Claim 1, **characterized in that** the polyamide component (P1) is preparable by ring-opening polymerization of lactams of the following formula (I): 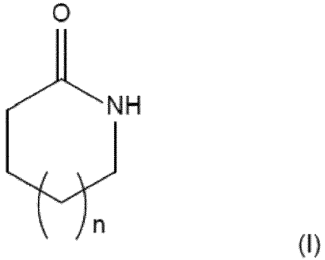
in which n = 6 to 10; or
by polycondensation of alpha,omega-aminocarboxylic acids of the formula (I'):
HOOC-R'-NH₂ (I')
where R' = C₉-₁₃ alkylene.

3. Coating material composition according to Claim 1 or 2, **characterized in that**
R is an (s + t)-valent organic radical selected from the group consisting of
(a) aliphatic hydrocarbon groups having 6 to 44, more preferably 34 to 42, carbon atoms,
(b) aliphatic radicals containing 2 carboxamide groups and additionally 70 to 90 carbon atoms in the form of hydrocarbon radicals, and
(c) aliphatic radicals which contain 3 to 13 ether groups (-O-) and additionally 6 to 26 carbon atoms in the form of hydrocarbon radicals.

4. Coating material composition according to any of Claims 1 to 3, **characterized in that** both radicals R¹ and R² independently of one another are the structure CₙH₂ₙ-(X)ₚ-R⁴.

5. Coating material composition according to any of Claims 1 to 4, **characterized in that** polycarboxamide component (P2) is obtainable by reaction of
(A) a polycarboxylic acid (III) or a polycarboxylic ester (III) 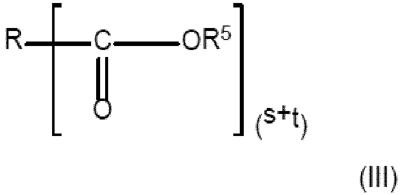 in which
R, s, and t are defined as in Claims 1 to 4, and
R⁵ is hydrogen or an alkyl radical having 1 to 6 carbon atoms; or
an anhydride of the formula (III') 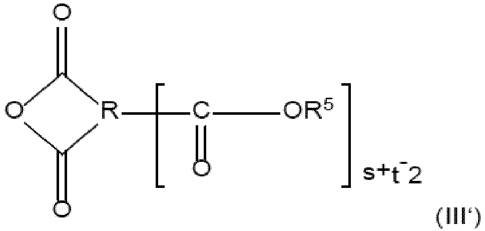 in which
R, R⁵, s, and t are defined as above,
and
(B) a primary or secondary amine of the formula HNR¹R², in which R¹ and R² are defined as in Claims 1 to 4.

6. Coating material composition according to Claim 5, **characterized in that** the amine NHR¹R² is a dialkanolamine or the reaction product of a dialkanolamine with lactones or oxiranes.

7. Coating material composition according to any of Claims 1 to 6, **characterized in that** the melting point of the polyamide component (P1) according to DIN EN ISO 3146:2002-06 is in the range from 160°C to 350°C.

8. Coating material composition according to any of Claims 1 to 7, **characterized in that** the polyol component (A) has a hydroxyl number of 80 to 250 mg KOH/g and is selected from the group of polyester polyols, polyurethane polyols, polysiloxane polyols, and poly(meth)acrylate polyols.

9. Coating material composition according to Claim 8, **characterized in that** the polyol component (A) is a poly(meth)acrylate polyol.

10. Coating material composition according to any of Claims 1 to 9, **characterized in that** the crosslinking agent component (B) comprises one or more crosslinking agents selected from the group of crosslinking agents having free isocyanate groups, crosslinking agents having blocked isocyanate groups, amino resins, and tris(alkoxycarbonylamino)triazines.

11. Coating material composition according to Claim 10, **characterized in that** the crosslinking agent component (B) comprises or consists of one or more crosslinking agents selected from the group of crosslinking agents having free isocyanate groups.

12. Coating material composition according to Claim 11, **characterized in that** the crosslinking agent is selected from the group consisting of hexamethylene 1,6-diisocyanate, isophorone diisocyanate, and 4,4'-methylenedicyclohexyl diisocyanate, their uretdione dimers, biuret dimers and/or isocyanurate trimers.

13. Coating material composition according to any of Claims 1 to 12, **characterized in that** it is free of silicas.

14. Coating material composition according to any of Claims 1 to 12, **characterized in that** it comprises as matting agent (M) a silica whereof the size distribution of the primary particles has a particle size median (D₅₀) below the median of the particles of the polyamide component (P1) used in the coating material.

15. Process for producing a coating material composition as defined in Claims 1 to 14, **characterized in that** the components which are liquid at 25°C are included wholly or partially in the initial charge, and the components which are solid at 25°C are stirred in subsequently, with any remainder of the components which are liquid at 25°C.

16. Multicoat paint system **characterized in that** it comprises as outermost clearcoat a coat obtained from a coating material composition according to any of Claims 1 to 14.

17. Multicoat paint system according to Claim 16, the clearcoat possessing a dry film thickness in the range from 20 to 60 µm.

18. Use of a formulation comprising at least one polyamide component (P1) as defined in any of Claims 1, 2 or 7 and at least one polycarboxamide component (P2) as defined in any of Claims 1 or 3 to 6 as an additive in coating material compositions for producing structured coatings.

## Revendications

1. Composition d'agent de revêtement, comprenant
(i) au moins un composant de polyol (A),
(ii) au moins un composant de réticulant (B) présentant des groupements réactifs vis-à-vis des groupements hydroxyle du composant (A),
(iii) au moins un composant de polyamide (P1), qui peut être obtenu à partir d'un acide monoamino-monocarboxylique ou de son lactame par polycondensation ou par polymérisation avec ouverture de cycle et dans lequel les groupements amide d'acide sont reliés par un radical hydrocarboné aliphatique saturé comprenant 6 à 13 atomes de carbone et qui est utilisé sous forme particulaire, sa distribution granulométrique des particules primaires, déterminée par diffraction au laser, possédant une médiane de la grosseur des particules (D₅₀) de 20 à 100 µm et
(iv) au moins un composant de poly(amide d'acide carboxylique) (P2),
**caractérisée en ce que** le composant de poly(amide d'acide carboxylique) (P2) présente la formule développée suivante 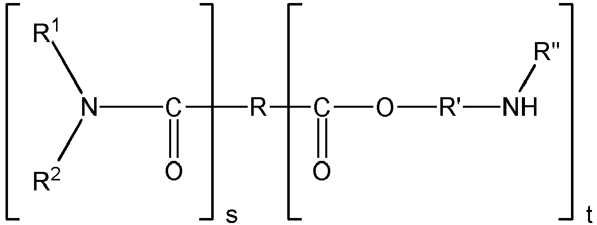 dans laquelle
s = 1, 2 ou 3,
t = 0 ou 1 et
s + t = 2 ou 3,
R représente un radical organique (s+t)-valent qui est choisi dans le groupe constitué par
(a) les groupements hydrocarbonés aliphatiques comprenant 2 à 60 atomes de carbone,
(b) les radicaux aliphatiques ou aliphatiques-aromatiques qui contiennent 2 à 8 groupements amide d'acide carboxylique et en plus 6 à 150 atomes de carbone sous forme de radicaux hydrocarbonés et
(c) les radicaux aliphatiques qui contiennent 2 à 75 groupements éther et en plus 4 à 150 atomes de carbone sous forme de radicaux hydrocarbonés,
(d) les groupements hydrocarbonés aromatiques comprenant 6 à 20 atomes de carbone,
R¹ représente hydrogène ou CₙH₂ₙR³, où n = 2 à 6 et R³ représente hydrogène ou un radical de structure (X)ₚ-R⁴, où p = 0 ou 1 et pour
p = 0, le radical R⁴ représente OH et pour
p = 1, le radical X représente un atome d'oxygène ou un groupement ester d'acide carboxylique
et R⁴
i. représente un radical hydrocarboné aliphatique comprenant 2 à 80 atomes de carbone, contenant 1 à 3 groupements hydroxyle ou
ii. représente un radical aliphatique contenant 1 à 3 groupements hydroxyle, qui contient 0 à 39 groupements choisis dans le groupe formé par les groupements éther et les groupements ester d'acide carboxylique et en plus 2 à 80 atomes de carbone sous forme de radicaux hydrocarbonés,
et R² représente un radical CₙH₂ₙ-(X)=-R⁴ ; et
-R'-NH-R" représente
- un radical -CₙH₂ₙ-NH-CₙH₂ₙ-(X)ₚ-R⁴,
- un radical -R⁴'-X-CₙH₂ₙ-NH-R¹ ou
- un radical -R⁴'-X-CₙH₂ₙ-NH-CₙH₂ₙ-(X)ₚ-R⁴, où
R⁴' représente un radical hydrocarboné aliphatique comprenant 2 à 80 atomes de carbone, contenant 0 à 2 groupements hydroxyle ou
R⁴' représente un radical aliphatique contenant 0 à 2 groupements hydroxyle, qui contient 0 à 39 groupements choisis dans le groupe formé par les groupements éther et les groupements ester d'acide carboxylique et en plus 2 à 80 atomes de carbone sous forme de radicaux hydrocarbonés.

2. Composition d'agent de revêtement selon la revendication 1, **caractérisée en ce que** le composant de polyamide (P1) peut être préparé par polymérisation avec ouverture de cycle de lactames de la formule (I) suivante : 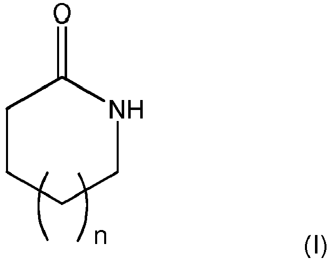 où n = 6 à 10 ; ou
par polycondensation à partir d'acides alpha,oméga-aminocarboxyliques de formule (I') :
HOOC-R'-NH₂ (I')
où R' = C₉₋₁₃-alkylène.

3. Composition d'agent de revêtement selon la revendication 1 ou 2, **caractérisée en ce que**
R représente un radical organique (s+t)-valent, choisi dans le groupe constitué par
(a) les groupements hydrocarbonés aliphatiques comprenant 6 à 44 atomes de carbone, de manière particulièrement préférée 34 à 42 atomes de carbone,
(b) les radicaux aliphatiques qui contiennent 2 groupements amide d'acide carboxylique et en plus 70 à 90 atomes de carbone sous forme de radicaux hydrocarbonés et
(c) les radicaux aliphatiques qui contiennent 3 à 13 groupements éther (-O-) et en plus 6 à 26 atomes de carbone sous forme de radicaux hydrocarbonés.

4. Composition d'agent de revêtement selon l'une quelconque des revendications 1 à 3, **caractérisée en ce que** les deux radicaux R¹ et R² représentent, indépendamment l'un de l'autre, la structure CₙH₂ₙ-(X)ₚ-R⁴.

5. Composition d'agent de revêtement selon l'une quelconque des revendications 1 à 4, **caractérisée en ce que** le composant de poly(amide d'acide carboxylique) (P2) peut être obtenu par réaction de
(A) un poly(acide carboxylique) (III) ou un poly(ester d'acide carboxylique) (III) 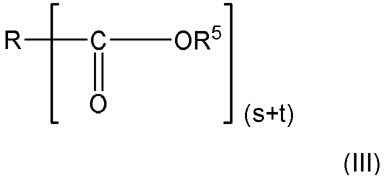 où
R, s et t sont tels que définis dans les revendications 1 à 4, et
R⁵ représente hydrogène ou un radical alkyle comprenant 1 à 6 atomes de carbone ; ou
un anhydride de formule (III') 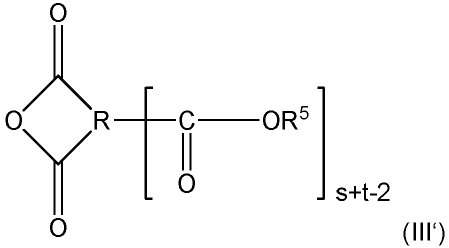 où
R, R⁵, s et t sont définis comme ci-dessus et
(B) une amine primaire ou secondaire de formule HNR¹R², où R¹ et R² sont tels que définis dans les revendications 1 à 4.

6. Composition d'agent de revêtement selon la revendication 5, **caractérisée en ce que** l'amine NHR¹R² est une dialcanolamine ou le produit de transformation d'une dialcanolamine avec des lactones ou des oxiranes.

7. Composition d'agent de revêtement selon l'une quelconque des revendications 1 à 6, **caractérisée en ce que** le point de fusion du composant de polyamide (P1) selon la norme DIN EN ISO 3146:2002-06 se situe dans la plage de 160°C à 350°C.

8. Composition d'agent de revêtement selon l'une quelconque des revendications 1 à 7, **caractérisée en ce que** le composant de polyol (A) présente un indice d'hydroxyle de 80 à 250 mg de KOH/g et est choisi dans le groupe constitué par les polyesterpolyols, les polyuréthanepolyols, les polysiloxanepolyols et les poly(méth)acrylate-polyols.

9. Composition d'agent de revêtement selon la revendication 8, **caractérisée en ce que** le composant de polyol (A) est un poly(méth)acrylate-polyol.

10. Composition d'agent de revêtement selon l'une quelconque des revendications 1 à 9, **caractérisée en ce que** le composant de réticulant (B) contient un ou plusieurs réticulants choisis dans le groupe des réticulants présentant des groupements isocyanate libres, des réticulants présentant des groupements isocyanate bloqués, des aminoplastes et des tris(alcoxycarbonylamino)triazines.

11. Composition d'agent de revêtement selon la revendication 10, **caractérisée en ce que** le composant de réticulant (B) contient un ou plusieurs réticulants ou est constitué par ceux-ci, qui sont choisis dans le groupe des réticulants présentant des groupements isocyanate libres.

12. Composition d'agent de revêtement selon la revendication 11, **caractérisée en ce que** le réticulant est choisi dans le groupe constitué par le 1,6-diisocyanate d'hexaméthylène, le diisocyanate d'isophorone et le diisocyanate de 4,4'-méthylènedicyclohexyle, leurs dimères d'uretdione, dimères de biuret et/ou leurs trimères d'isocyanurate.

13. Composition d'agent de revêtement selon l'une quelconque des revendications 1 à 12, **caractérisée en ce qu'**elle est exempte de silices.

14. Composition d'agent de revêtement selon l'une quelconque des revendications 1 à 12, **caractérisée en ce qu'**elle contient, comme agent de matage (M), une silice qui présente une distribution granulométrique des particules primaires dont la médiane des grosseurs de particule (D₅₀) est inférieure à la médiane des particules du composant de polyamide (P1) utilisé dans l'agent de revêtement.

15. Procédé pour la préparation d'une composition d'agent de revêtement telle que définie dans les revendications 1 à 14, **caractérisé en ce que** les composants liquides à 25°C sont disposés, totalement ou partiellement, au préalable et les composants solides à 25°C sont introduits en agitant ultérieurement, avec les composants liquides à 25°C résiduels le cas échéant encore présents.

16. Laquage multicouche, **caractérisé en ce qu'**il comprend, comme couche externe de laque claire, une couche qui a été obtenue à partir d'une composition d'agent de revêtement selon l'une quelconque des revendications 1 à 14.

17. Laquage multicouche selon la revendication 16, la couche de laque claire présentant une épaisseur de couche sèche dans la plage de 20 à 60 µm.

18. Utilisation d'une formulation comprenant au moins un composant de polyamide (P1) tel qu'il est défini dans l'une quelconque des revendications 1, 2 ou 7 et au moins un composant de poly(amide d'acide carboxylique) (P2) tel qu'il est défini dans l'une quelconque des revendications 1 ou 3 à 6, comme additif dans des compositions d'agent de revêtement destinées à la préparation de laquages structurés.
